Europäisches Patentamt

European Patent Office

Office européen des brevets

(11) Publication number: **0 347 837**
**A2**

(12) **EUROPEAN PATENT APPLICATION**

(21) Application number: 89111204.7

(22) Date of filing: 20.06.89

(51) Int. Cl.4: **B29C 45/36 , A61B 5/14**

(30) Priority: 20.06.88 JP 152489/88

(43) Date of publication of application:
27.12.89 Bulletin 89/52

(84) Designated Contracting States:
**BE DE ES FR GB IT NL SE**

(71) Applicant: **Terumo Kabushiki Kaisha**
**No. 44-1, Hatagaya 2-chome Shibuya-ku**
**Tokyo 151(JP)**

(72) Inventor: **Mikaye, Sanae**
**Terumo K.K. 1727-1, Isukijiarai**
**Showa-cho Nakakoma-gun Yamanashi(JP)**
Inventor: **Kasai, Masaaki**
**Terumo K.K. 1727-1, Isukijiarai**
**Showa-cho Nakakoma-gun Yamanashi(JP)**
Inventor: **Yamazaki, Sakae**
**Terumo K.K. 1727-1, Isukijiarai**
**Showa-cho Nakakoma-gun Yamanashi(JP)**

(74) Representative: **Casalonga, Axel et al**
**BUREAU D.A. CASALONGA - JOSSE**
**Morassistrasse 8**
**D-8000 München 5(DE)**

(54) **Plastic tubular article and mold and method for molding the same.**

(57) In a plastic tubular article having an open end and a closed bottom, a recess is formed at the center of the outer bottom surface of the article, and a projection is formed on the inner bottom surface of the article at the position corresponding to the recess so that the bottom is hard to be damaged even when the article is dropped as its bottom is down. A mold for molding such a plastic tubular article comprises a core pin and an outer mold, said core pin having a recess at the center of the tip thereof, said outer mold having a projection on the inner surface thereof at the position corresponding to the recess, a narrow passage formed between the periphery of the recess and the periphery edge of the projection, and a gate for injection of molten synthetic resin being formed at the center of the projection, so that the core pin is kept at the concentric position with the projection during injection of the molten synthetic resin because of a self-alignment function, therefore, an even thickness of the side wall of molded article is ensured.

*FIG. 1*

# PLASTIC TUBULAR ARTICLE AND MOLD AND METHOD FOR MOLDING THE SAME

## BACKGROUND OF THE INVENTION

Field of the Invention:

This invention relates to a plastic tubular article molded by injection molding and a mold and a method for molding the same.

Description of the Prior Art:

Recently, injection molding technique has been remarkably developed. Injection-molded plastic articles are used in a wide field from large-size to precise articles owing to progress of injection molding machine, improvements of material, construction and machining accuracy of mold, and development and improvement of plastic material. Especially, injection molding process is widely used for manufacturing plastic tubular articles such as test tubes, bottles, protection cases for needles, etc. for medical or physicochemical use, and bodies of fountain pens and ball-point pens.

On the other hand, various blood collectors have been used in clinical laboratory tests such as biochemical examination and serologic test. Most commonly used blood collectors comprising a blood collecting tube whose interior is kept under reduced pressure and a tube holder which can receive the blood collecting tube and is provided with a puncture needle at the tip thereof. The blood collecting tube comprises a plastic tube having an open end and a closed bottom, and a seal member for closing the open end of the plastic tube.

For manufacturing such a plastic tube having an open end and a closed bottom by injection molding, a core pin is used as a part of mold for molding the inside shape of the tube. However, because the core pin is slender and supported only at one end thereof, even in the case of the mold having a gate for injection of a molten synthetic resin at the position opposite to the tip of the core pin, the core pin is forced to bend by the pressure of the molten synthetic resin injected toward the tip region of the core pin through the gate. The bent core pin results in an uneven thickness of the molded tube. The molded tube has a thick portion of the side wall and a thin portion of the side wall. The thin portion shows relatively low mechanical strength. In addition, such a tube may distort upon cooling because of the difference of the shrinkage manner between the thick portion of the side wall and the thin portion of the side wall.

This tendency is remarkable in the case of using material of less melt flow index or easy to solidify or crystallize upon cooling, such as polyvinyl chloride, polystyrene, polymethylmethacrylate, polycarbonate, and polyester resin.

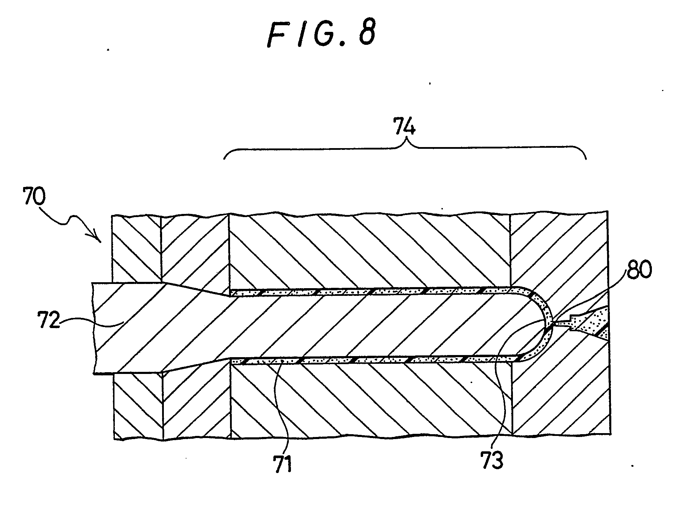

The problem will now be described concretely. When a mold 70 of conventional construction as shown in Fig.8 is used to mold a plastic tube 71 having an open end and a closed bottom, a high-pressurized synthetic resin having a high viscosity injected through a pin gate 80 which is disposed at the inner bottom center of an outer mold 74, strikes against the tip 73 of a core pin 72 which is to mold the inside shape of the plastic tube 71. The initially injected part of the molten synthetic resin impacts the tip 73 of the core pin 72 upon flowing into the space between the core pin 72 and the outer mold 74 to bend a little the core pin 72. As a result, the pin gate 80 relatively deviates from the center of curvature of the tip 73 of the core pin 72 so that the core pin 72 is forced to bend more by the pressure of the successively injected part of the molten synthetic resin. Consequently, the thickness of the side wall of the molded tube 71 is locationally increased or decreased.

The smaller the inside diameter of the molded tube and the larger the ratio of the length to the diameter of the core pin, the easier the bend of the core pin. In spite of measures such as choice of material, hardening by quenching, etc., in many cases, the core pin cannot endure the pressure of molten synthetic resin injected so that it is bent.

Because the outer bottom surface of a plastic tube for blood collecting use which was molded with such a mold as shown in Fig.8 is in general curved hemispherically, like a cannonball surface, or the like, when the tube is dropped as its bottom is down, it comes into contact with a floor or the like only at a point of its curved bottom surface. As a result, it may crack from the contact point or be dented at the contact place. Further, because of the unevenness of the thickness, such a plastic tube decreases the mechanical strength at a thin portion of the side wall. It may depress because the thin portion cannot endure the difference between the atmospheric pressure and the internal pressure of the tube when it is warmed up because of, for instance, the atmospheric temperature rising.

## SUMMARY OF THE INVENTION

Accordingly, it is an object of the present invention to provide a plastic tubular article having an open end and a closed bottom wherein the bottom is substantially strengthened and the side wall of the tube has a substantially even thickness.

It is another object of the present invention to provide a mold for molding a plastic tubular article having an open end and a closed bottom wherein the bottom of the article is substantially strengthened and the side wall thereof has a substantially even thickness.

It is still another object of the present invention to provide a method for molding a plastic tubular article having an open end and a closed bottom wherein the bottom of the article is substantially strengthened and the side wall thereof has a substantially even thickness.

According to a first aspect of the present invention, a plastic tubular article made by injection molding, comprises a tubular portion having an open end, a side wall of said tubular portion having a substantially even thickness, a closed bottom integrally formed with said tubular portion, said closed bottom having a recess which is formed at the center of the outer surface therein, said closed bottom having a projection which extends to said open end of said tubular portion and is formed on the inner surface therein at the position corresponding to said recess, said closed bottom having a thin portion formed between a periphery of said projection and a periphery of said recess.

According to a second aspect of the invention, a mold for molding a plastic tubular article having an open end and a closed bottom, comprising a core pin for molding the inside shape of said tubular article, an outer mold for molding the outside shape of said tubular article, said outer mold allowing the core pin to enter therein, said core pin having a recess at the center of the tip thereof, said outer mold having a projection on the inner surface thereof at the position corresponding to said recess, a narrow passage formed between a periphery of said recess and the periphery edge of said projection, and a gate for injection of synthetic resin being formed at the center of said projection.

According to a third aspect of the present invevtion, a method for molding a plastic tubular article having an open end and a closed bottom by use of a mold which comprises a core pin for molding the inside shape of said tubular article, an outer mold for molding the outside shape of said tubular article, said outer mold allowing said core pin to enter therein, said core pin having a recess at the center of the tip thereof, said outer mold having a projection on the inner surface thereof at the position corresponding to said recess, a narrow passage formed between a periphery of said recess and a periphery edge of said projection, and a gate for injection of synthetic resin formed at the center of said projection, comprises steps of putting said core pin in said outer molding, and injecting a synthetic resin through said gate of said outer mold toward said recess at the tip center of said core pin to fill up the space between the outer surface of said core pin and the inner surface of said outer mold with said synthetic resin.

## BRIEF DESCRIPTION OF THE DRAWINGS

The above and other objects, features, and advantages of the present invention will be better understood from the following description taken in conjunction with the accompanying drawings, in which;

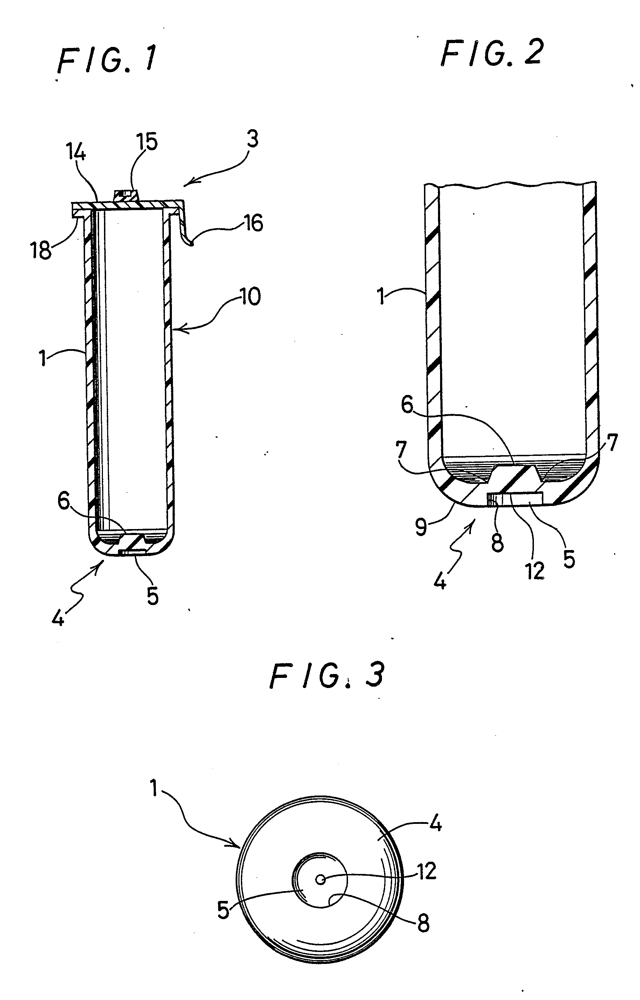

. Fig.1 is a cross sectional view of a plastic tube for blood collecting use according to one preferred embodiment of the present invention;

Fig.2 is an enlarged sectional view of a closed bottom portion of the plastic tube of Fig.1;

Fig.3 is a bottom plan view of the closed bottom portion of Fig. 2;

Fig.4 is a cross sectional view of a mold of the present invention;

Fig.5 is an enlarged sectional view of part of the mold of Fig. 4;

Figs.6 and 7 are cross sectional views of other plastic tubes and molds according to another preferred embodiment of the present invention; and

Fig.8 is a cross sectional view of a plastic tube and a mold as a prior art.

## DETAILED DESCRIPTION OF THE PREFERRED EMBODIMENTS

Referring first to Figs.1 to 3, an embodiment in which the plastic tubular article of the present invention is applied to a plastic tube for blood collecting use will be described.

As shown in Fig.1, a blood collecting tube 10 includes a plastic tube 1 and a closure member 3. The plastic tube 1 comprises a tubular portion having an open end and a closed bottom integrally formed with the tubular portion. The closure member 3 attached to the open end of the plastic tube 1 in a gas-tight manner and allows a needle of a blood collector such as a tube holder (not shown) to pierce therethrough. The internal pressure of the blood-gathering tube 10 is reduced in accordance with the amount of blood to be collected.

The plastic tube 1 comprises the tubular portion having a cylindrical side wall and a closed bottom 4 which is formed into one body with the side wall to form the closed end of the tube. As shown in Fig.1, the plastic tube 1 has an annular outward flange 18 formed at the open end of the tube. The flange 18 is to mount the seal member 3 and projects out perpendicularly to the axis of the tube. The plastic tube 1 is provided with a recess 5 which is formed at the center of the outer surface of the bottom 4. A projection 6 which extends to the open end and is formed on the inner surface of the bottom 4 so as to align with the recess 5. The thickness of the bottom 4 is decreased at the area between the bottom boundaries 7 and 8 of the projection 6 and recess 5 to form a thin portion 9. In other words, the thin portion 9 is formed between a periphery of the projection 6 and a periphery edge of the recess 5. A gate position 12 at which the molded tube 1 was cut off from part of plastic remaining in gate of mold is located at the bottom center of the recess 5.

Because an annular level zone is formed around the recess 5 of the bottom 4 and the bottom of the tube 1 is not convex as conventional one, when the plastic tube 1 is dropped as its bottom is down, it rarely comes into contact with a floor or the like only at a point of the bottom 4. Therefore, the bottom 4 of the tube is hard to be damaged. This means that the bottom 4 is substantially strengthened. The thickness of the side wall of the tube 1 is sabstantially even and there is no thin portion which shows relatively low mechanical strength. Therefore, when the tube 1 is used for a blood collecting tube the internal pressure of which is reduced, it is hard to be dented by the differential pressure between the atmospheric pressure and the internal pressure of the tube even if it is warmed up because of, for instance, the atmospheric temperature rising.

According to the invention, it is preferable that the plastic tube 1 has the outer diameter of 10.0 to 20.0 mm, the inner diameter of 7.0 to 8.0 mm, the thickness of the side wall of 0.4 to 1.8 mm and the full length of 40.0 to 150.0 mm. Preferable shape of the recess 5 is a circle, a polygon, etc. The dimension of the recess 5 is preferably 2.0 to 15.0 mm in diameter (1/5 to 5/6 of the outer diameter of the tube) and 0.2 to 1.5 mm in depth (1/5 to 1/2 of the thickness). Preferable shape of the projection 6 is a low cylinder, a circular truncated cone, a hemisphere, a parabolic form, etc. The dimension of the projection 6 is preferably 2.0 to 15.0 mm in diameter (1/8 to 9/10 of the inner diameter of the tube) and 0.3 to 3.6 mm in height (one half to double of the thickness). When the thickness of the side wall is 0.4 to 1.8 mm, the thickness of the thin portion 9 is preferably 0. 1 to 1.0 mm (1/5 to 1/2 of the side wall thickness), more preferably, 0.2 to 0.6 mm (about 1/3 of the side wall thickness) though it depends on the kind of a synthetic resin used. Because the thin portion 9 is at the bottom of the tube and is a narrow area supported by the other part of the bottom, the mechanical strength of the plastic tube 1 is not so lowered at the thin portion 9 and the tube 1 is scarcely dented at that portion when it is used for a blood collecting tube having a reduced pressure interior.

The material of the plastic tube 1 may be synthetic resins usable in injection molding process and preferably showing high gas barrier properties so as to keep reduced-pressure state in the tube. Instances of the material are polyacrylonitrile, polyvinyl chloride, polyethylene terephthalate, PMMA (polymethyl-methacrylate) and polyester resin. In case the tube 1 is formed from a poor gas barrier material (for instance, polypropylene, polyethylene or polystyrene), the surface (for instance, outer surface) of the tube 1 is preferably coated with a layer having gas barrier properties such as polyvinyl alcohol and ethylene-vinyl alcohol copolymer, otherwise it is preferable to contrive a package for keeping reduced-pressure state in the tube. When the tube 1 is made of hydrophobic synthetic resins, it is preferable to treat the inner surface of the tube to be hydrophilic so as to prevent blood corpuscles from adhering to the inner surface. This treatment can be carried out by coating the inner surface of the tube with hydrophilic materials such as water-soluble silicone resin, polyvinyl alcohol and polyvinyl pyrrolidone.

Depending on the intended application an anticoagulant agent such as heparin powder and EDTA-2K may be applied to the inner surface of the tube 1 or contained in the tube 1. To the contrary, blood-coagulation promoter may be applied to the inner surface of the tube 1 or contained in the tube 1. Further, a filter paper, a non-woven fabric, or the like, to which blood-coagulation promoter has been applied or into which blood-coagulation promoter has been permeated, may be enclosed in the tube 1.

The closure member 3 comprises a gas-barrier member 14 and a sealing member 15 mounted on the gas-barrier member 14. The gas-barrier member 14 is for closing the open end of the tube 1 and may be keeping reduced-pressure state in the tube. The gas-barrier film formed of a material showing high gas-barrier properties, for instance, a metal foil such as an aluminum foil, or resin films such as ethylene-vinyl alcohol copolymer and polyvinylidene chloride. The sealing member is preferably disposed on the lower surface of such a gas-barrier member to stick the latter onto the open end of the tube 1. The sealing member may be made of resin possible to be welded to material of the tube 1 or having adhesion and ability of easy-peeling. It is preferable that another resin film is disposed on the upper surface of such a gas-barrier member to improve the mechanical strength of the total composite film. As shown in Fig.1, the closure member 3 is provided with a tab 16 for detaching the closure member 3 from the tube 1. A preferable form of the closure member 3 is a multilayer film comprising an upper layer of resin film, an intermediate layer of gas-barrier film and a lower layer of adhesive film.

The sealing member must be of a material capable of sealing a puncture opening to maintain liquid tightness both when the hollow needle segment of the tube holder (not shown) is thrusted into and withdrawn from the closure member 3. The sealing member 15 may be made of rubber such as natural rubber, isoprene rubber, chloroprene rubber and silicone rubber, and resins such as thermoplastic elastomer, for example, styrene-butadiene-styrene (SBS) block copolymer.

The closure member 3 including an adhesive film at the lower surface can be attached airtightly to the flange 18 of the tube 1, or onto the fringe of the open end of the tube if such a flange is not provided, by welding with heat, ultrasonics or high frequency, or by adhesion with adhesive or solvent. A conventional rubber plug may be used as the closure member of the tube 1.

A reduced-pressure state in the blood collecting tube 10 can be made by the manner that the seal member 3 is attached to the plastic tube 1 at a reduced atmospheric-pressure.

A plastic tube of the present invention can be used as a test tube. In that case, no flange may be provided.

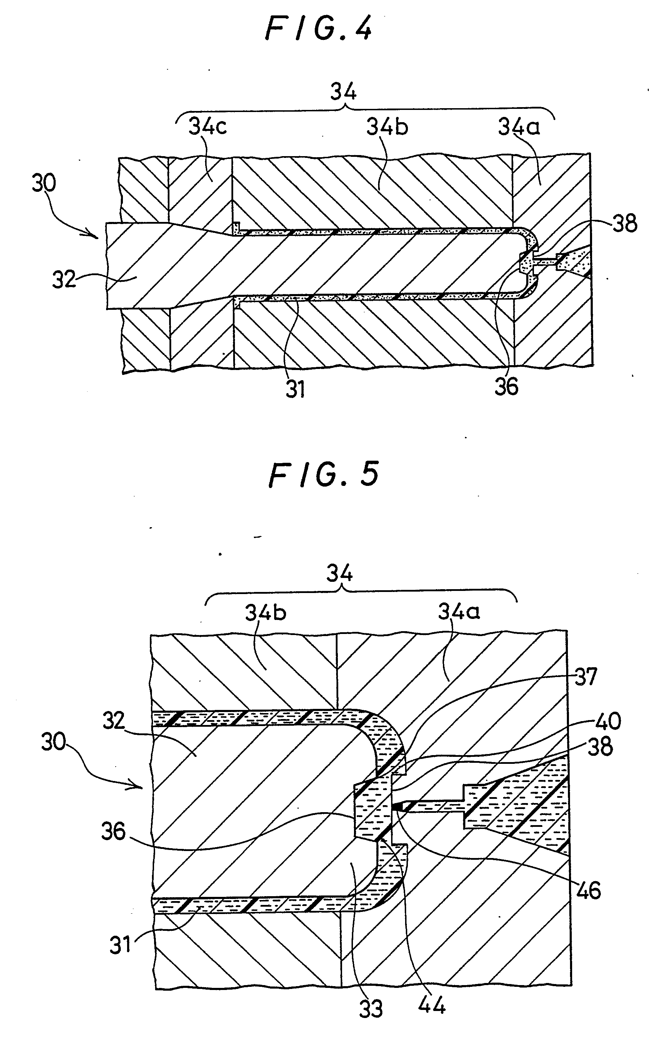

Next, a mold and a method for molding a plastic tube of the present invention will be described with reference to Figs.4 and 5.

As shown in Fig. 4, a mold 30 of the present invention comprises a core pin 32 for molding the inside shape of a plastic tube, and an outer mold 34 for molding the outsie shape of the tube. The core pin 32 is provided with a recess 36 at the center of the tip thereof. As shown in Fig.5, the outer mold 34 is provided with a projection 38 formed on the inner surface thereof at the position corresponding to the recess 36 of the core pin 32. An annular narrow passage 44 is formed between the periphery 37 of the recess 36 and the periphery edge 40 of the projection 38. The distance between the core pin 32 and the outer mold 34 is decreased at the narrow passage 44. A pin gate 46 for injection of a molten synthetic resin is formed at the center of the projection 38.

In a method of the present invention using the above mold 30, the core pin 32 is put in the outer mold 34, and molten synthetic resin is then injected through the pin gate 46 of the outer mold 34 toward the recess 36 at the tip center of the core pin 32, and subsequently, the space between the core pin 32 and the outer mold 34 is filled up with the molten synthetic resin injected.

A plastic tube shown in Fig. 4, one end of which is open and the other end of which is closed to form a bottom, has the outer diameter of about 15.5 mm, the inner diameter of 13.5 mm, the thickness of the molded side wall of 1.0 mm and the full length of 100 mm.

The outer mold 34 of the mold 30 comprises a first mold part 34a for molding the bottom surface of the tube, a second mold part 34b for molding the outer surface of the side wall of the tube, and a third mold part 34c for molding the outer surface of the open end of the tube.

As shown in Fig.5, the projection 38 surrounding the pin gate 46 is formed on the inner surface of the first mold part 34a. The recess 36 for stagnation of the molten synthetic resin is formed at the center of the tip 33 of the core pin 32 so as to correspond to the projection 38 of the first mold part 34a. The narrow passage 44 at which the distance between the core pin 32 and the first mold part 34a is smaller than that at the other portions is formed between the periphery 37 of the recess 36 and the periphery edge 40 of the projection 38.

The narrow passage 44 is formed when the outline of the periphery edge of the projection has the same shape as that of the periphery of the recess and the inner diameter of the recess is the same as or a little smaller (within nearly 0.5 mm) than the diameter of the projection. In the case of the same shape and the same diameter, the profile of narrow passage shapes into a closed-loop line. In the case that the inner diameter of the recess is smaller than the diameter of the projection, a narrow passage the profile of which shapes into a ring having a width according to the difference between both diameters is formed.

In an outer mold of the invention, the first mold part and the second mold part may be made into one body.

In a method of the invention using the mold 30, when the molten synthetic resin of high viscosity is injected into the mold cavity through the pin gate 46 at a high pressure after the core pin 32 is put in the outer mold 34, the molten synthetic resin injected flows into the recess 36 of the core pin 32 at the first and stays there temporarily. The molten synthetic resin then flows through the narrow passage 44 into the space between the inner surface of the outer mold 34 and the outer surface of the core pin 32 to fill up the space. In this case, if the core pin 32 is bent due to a shock by the molten synthetic resin injected, the distribution of distance between the core pin 32 and the first mold part 34a at the narrow passage 44 varies so that the distance in the direction to which the core pin 32 moves is increased while the distance in the opposite direction is decreased. As a result, the internal pressure of the molten synthetic resin in the recess 36 is decreased at the increased-distance side and increased at the decreased-distance side. The core pin 32 is therefore moved back by the differential pressure between them through the side wall portion of the recess 36. By this self-alignment function, the core pin 36 is kept concentric with the projection 38 formed around the pin gate 46 during injection of molten synthetic resin. Consequently, the core pin 36 is prevented from bending and an even thickness of the side wall of the molded tube is ensured. The molded tube is taken out from the mold 30 after cooling the synthetic resin injected and removing the core pin 32.

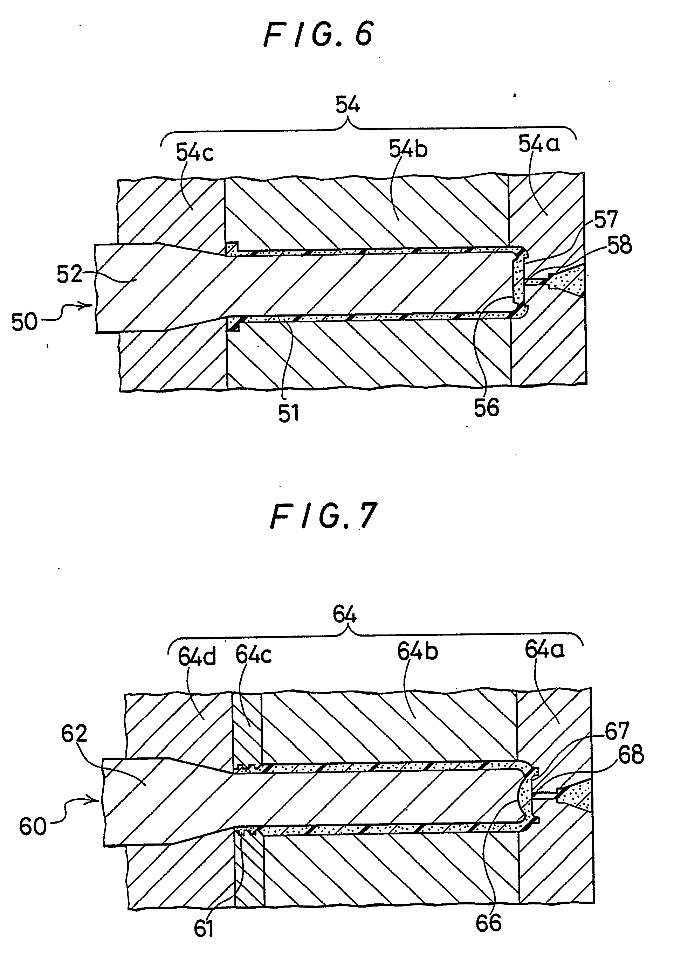

Figs.6 and 7 show other embodiments of the present invention, respectively.

In the embodiment shown in Fig. 6, the present invention is applied to a protection case for a hypodermic needle. A plastic tube 51 has the inner diameter of about 5 mm and the full length of 85 mm. The diameter of the tube at the portion correspondig to the tip of the core pin is about 3.5 mm. In this embodiment, an annular projection is formed on the outer surface at the circumferential portion of the bottom of the tube and a recess is formed relatively by the projection. A mold 50 shown in Fig.6 consists of a core pin 52 provided with a recess 56 at the tip thereof, and an outer mold 54 comprising a first mold part 54a, a second mold part 54b and a third mold part 54c. In the tube 51 molded with this mold 54, a gate position at which the molded tube was cut off from part of a synthetic resin remaining in the gate of the mold is hidden by the projection formed on the bottom surface of the tube. A projection which shapes a circular truncated cone is formed on the inner bottom surface of the tube by the recess 56 of the core pin 52. A thin portion is formed in the bottom of the tube between the bottom boundaries of the projection and recess.

In the embodiment shown in Fig.7, the present invention is applied to a small tubular receptacle with a screw cap. In this embodiment, a projection which shapes a part of a sphere is formed on the inner bottom surface of a plastic tube 61. A mold 60 shown in Fig.7 consists of a core pin 62 provided with a recess 66 at the tip thereof, and an outer mold 64 comprising a first mold part 64a, a second mold part 64b and a third mold part 64c. In the tube 61 molded with this mold 60, a gate position at which the molded tube was cut off from part of a synthetic resin remaining in the gate of the mold is hidden by an annular projection formed on the outer bottom surface of the tube. A recess is formed at the bottom of the tube relatively by the projection. The hemispheric projection is formed on the inner bottom surface of the tube by the recess 66 of the core pin 62. A thin portion is formed in the bottom of the tube between the bottom boundaries of the projection and recess.

In a mold of the present invention, the diameter of the projection formed around the pin gate of the outer mold is preferably as near as possible to the diameter of the core pin and the inner diameter of the hollow formed at the tip of the core pin within the permissible range of a function of the molded tube because the stability of the core pin owing to the differential pressure produced in the hollow of the core pin becomes large and effective.

In a plastic tubular article of the invention, because a recess is provided at the outer bottom surface of the article to form an annular level zone arround the recess and the bottom of the article is not convex as conventional one, when the plastic tubular article is dropped as its bottom is down, it rarely comes into contact with a floor or the like only at a point of the bottom. Therefore, the bottom of the article is hard to be damaged so it is substantially strengthened. In addition, the thickness of the side wall of the article is sabstantially even and there is no decreased-thickness portion which shows relatively low mechanical strength. Therefore, when the article is used for a blood collecting tube the internal pressure of which is reduced, it is hard to be dented by the differential pressure between the atmospheric pressure and the internal pressure of the article even if it is warmed up because of, for instance, the atmospheric temperature rising.

In a mold of the invention, because a recess is provided at the tip of the core pin so as to face the gate for injection of molten synthetic resin and a narrow passage is formed between the periphery of the recess and the periphery edge of a projection formed on the inner surface of the outer mold, the molten synthetic resin injected through the gate flows into the recess of the core pin at the first and stays there temporarily before it flows into the other portions of the mold cavity. At this time, if the core pin is bent due to a shock by the molten synthetic resin injected, the distance distribution at the narrow passage varies so that the distance in the direction to which the core pin moves is increased while the distance in the opposite direction is decreased. As a result, the internal pressure of the molten synthetic resin in the recess of the core pin is decreased at the increased-distance side and increased at the decreased-distance side. The core pin is therefore moved back by the differential pressure through the side wall portion of the recess. By this self-alignment function, the core pin is kept at the concentric position with the projection formed on the inner surface of the outer mold around the gate during injection of molten synthetic resin. Consequently, the core pin is prevented from bending and an even thickness of the side wall of the molded article is ensured. Therefore, the molded article shows uniform shrinkage manner at every side wall portions so any bend of the article is not brought on when it is cooled and solidified. In addition, because no decreased-thickness portion is formed at the side wall of the article, good mechanical strength of the article is ensured on the entire circumference of the side wall. A plastic tubular article having good mechanical strength can be manufactured by a method of the invention with a mold of the invention.

As many apparently widely different embodiments of this invention may be made without departing from the spirit and scope thereof, it is to be understood that the invention is not limited to the specific embodiments thereof except as defined in the appended claims.

## Claims

1. A plastic tubular article made by injection molding, comprising a tubular portion having an open end, a side wall of said tubular portion having a substantially even thickness, a closed bottom integrally formed with said tubular portion, said closed bottom having a recess which is formed at the center of the outer surface therein, said closed bottom having a projection which extends to said open end of said tubular portion and is formed on the inner surface therein at the position corresponding to said recess, said closed bottom having a thin portion formed between a periphery of said projection and a periphery of said recess.

2. A plastic tubular article according to claim 1, wherein a gate position for said injection molding is located at the center of said recess.

3. A plastic tubular article according to claim 1, wherein said recess is a circular recess, and said projection is a circular projection.

4. A plastic tubular article according to claim 1, wherein said tubular article is made of a material having high gas-barrier properties.

5. A plastic tubular article according to claim 1, wherein said tubular article is made of a material selected from the group consisting of polyacrylonitrile, polyvinylchloride, polyethylene terephthalate and polymethylmethacrylate.

6. A plastic tubular article according to claim 1, wherein a surface of said tubular article is coated with a layer having gas barrier properties.

7. A plastic tubular article according to claim 6, wherein said layer is made of polyvinyl alcohol or ethylene-vinylalcohol copolymer.

8. A plastic tubular article according to claim 1, wherein an inner surface of said tubular article is coated with a hydrophilic material.

9. A plastic tubular article according to claim 1, wherein an anticoagulant agent is applied to the inner surface of said tubular article or contained therein.

10. A plastic tubular article according to claim 1, wherein a blood-coagulation promoter is applied to the inner surface of said tubular article or contained therein.

11. A plastic tubular article according to claim 1, wherein a closure member is attached to said open end of said tubular article in a gas-tight manner, and the interior of said tubular article is under reduced pressure.

12. A plastic tubular article according to claim 1, wherein said tubular article is provided with a flange at said open end.

13. A mold for molding a plastic tubular article having an open end and a closed bottom, comprising a core pin for molding the inside shape of said tubular article, an outer mold for molding the outside shape of said tubular article, said outer mold allowing said core pin to enter therein, said core pin having a recess at the center of the tip thereof, said outer mold having a projection on the inner surface thereof at the position corresponding to said recess, a narrow passage formed between a periphery of said recess and a periphery edge of said projection, and a gate for injection of a synthetic resin formed at the center of said projection.

14. A mold according to claim 13, wherein said recess of said core pin has a shape of which is selected from the group consisting of a low cylinder, a circular truncated cone, a hemisphere and a parabolic form.

15. A mold according to claim 13, wherein a profile of said narrow passage shapes into a closed-loop line.

16. A mold according to claim 13, wherein a profile of said narrow passage shapes into a ring having a width.

17. A method for molding a plastic tubular article having an open end and a closed bottom by use of a mold which comprises a core pin for molding the inside shape of said tubular article, an outer mold for molding the outside shape of said tubular article, said outer mold allowing said core pin to enter therein, said core pin having a recess at the center of the tip thereof, said outer mold having a projection on the inner surface thereof at the position corresponding to said recess, a narrow passage formed between a periphery of said recess and a periphery edge of said projection, and a gate for injection of synthetic resin formed at the center of said projection, wherein said method comprises steps of putting said core pin in said outer molding, and injecting a synthetic resin through said gate of said outer mold toward said recess at the tip center of said core pin to fill up the space between the outer surface of said core pin and the inner surface of said outer mold with said synthetic resin.

# FIG. 1

# FIG. 2

# FIG. 3

# FIG. 4

# FIG. 5

## F I G. 6

## F I G. 7

# FIG.8